# EUROPEAN PATENT SPECIFICATION

(11) **EP 0 366 834 B1**
(45) Date of publication and mention of the grant of the patent: **01.03.1995**
(21) Application number: 88121026.4
(22) Date of filing: 15.12.1988
(51) Int. Cl.: C01G 49/06

(54) **Method for producing powdered iron oxide**
Verfahren zur Herstellung von Eisenoxidpulver
Procédé de préparation d'oxyde de fer en poudre

(30) Priority: 17.10.1988 JP 259448/88
(43) Date of publication of application: 09.05.1990
(73) Proprietor: TDK Corporation, Chuo-ku, Tokyo-to 103 (JP); Chemirite, Ltd., Chuo-ku Tokyo (JP)
(72) Inventor: Hirai, Naoe c/o Chemirite Ltd., Tokyo 104 (JP); Murase, Tohoru c/o Chemirite Ltd., Tokyo 104 (JP); Okutani, Katsunobu c/o TDK Corporation, Tokyo 103 (JP); Mori, Teruo c/o TDK Corporation, Tokyo 103 (JP)
(74) Representative: Sajda, Wolf E., Dipl.-Phys.

(56) References cited:
- EP-A- 0 343 283
- FR-A- 976 966
- US-A- 4 119 536
- PATENT ABSTRACTS OF JAPAN, page 625 C 78; & JP-A-53 23 898 (ASAHIDENKA KOGYO K.K.)
- PATENT ABSTRACTS OF JAPAN, vol. 12, no. 405 (C-539)[3252] 26th October 1988;& JP-A-63 144 123 (SUMITOMO METAL IND.)
- PATENT ABSTRACTS OF JAPAN, vol. 8, no. 178 (C-238)[1615] 16th August 1984;& JP-A-59 73 439 (SHIN NIPPON SEITETSU K.K.)

## Description

The present invention relates to a method for producing powdered iron oxide which can be used for manufacturing high-quality soft ferrite. In particular, the invention relates to a method for producing powdered iron oxide by oxidizing roasting an iron chloride solution, and to the use of the iron oxide obtained by such a method.

In prior art methods, a hydrochloric solution having served for pickling of iron and steel, a solution obtained by dissolving iron and steel and/or iron oxide in hydrochloric acid, as well as heated and concentrated solutions thereof, or the solutions thereof whose insolubles were filtrated, have been used as a crude iron chloride solution in this field. Namely, powdered iron oxides are widely produced by roasting and oxidizing such a crude iron chloride solution.

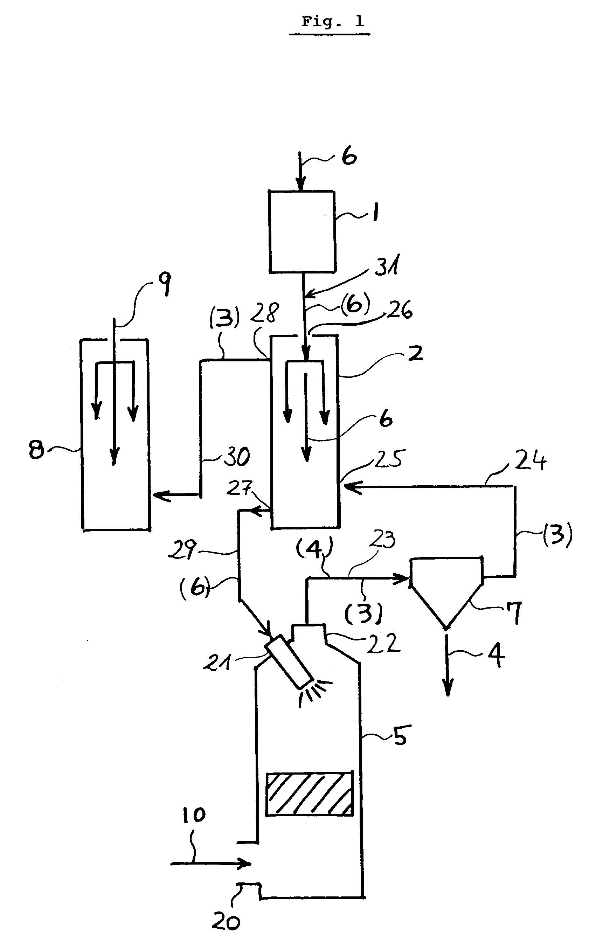

This powdered iron oxide is used as a raw material for producing soft ferrite of ordinary grades. Fig. 1 shows a diagrammatic view of an apparatus for carrying out such a process, wherein the flow is explained below. A reservoir 1 is filled with a waste hydrochloric pickling solution 6, and the reservoir 1 is connected to the first inlet 26 of a contact tower 2 by means of a conduit 31. A second inlet 25 of the contact tower 2 is supplied with hot gas 3 from a roasting furnace 5. The roasting furnace 5 has a first inlet 20 through which hot air 10 is supplied, while an outlet 22 of the roasting furnace 5 is connected through a conduit 23 to a dust collector 7 which in turn is connected by a conduit 24 to the second inlet 25 of the contact tower 2.

A first outlet 27 of the contact tower 2 is connected through a conduit 29 to a second inlet 21 of the roasting furnace 5. A second outlet 28 of the contact tower 2 is connected to a recovering tower 8 by means of a conduit 30. To the other inlet of the recovering tower 8 spray water 9 is supplied as indicated in the drawing.

The function of such an apparatus is as follows. The hydrochloric pickling solution 6 is supplied to the contact tower 2 where it gets in contact with hot gas 3 which is generated in the roasting furnace 5 and supplied through the second inlet 25 as mentioned above. By this contact, the waste hydrochloric pickling solution 6 is heated and concentrated in the contact tower 2. Thereafter, the heated and concentrated pickling solution 6 is supplied from the contact tower 2 through the conduit 29 and the second inlet 21 to the roasting furnace 5 into which the pickling solution 6 is sprayed in the form of a mist consisting of very small particles of iron chloride liquid. This mist is roasted and oxidized into an iron oxide before the particles reach the bottom of the roasting furnace 5. In this manner, powdered iron oxide 4 and hot gas 3 are produced which are output through the outlet 22 wherein the iron oxide powder thus formed is transported by the hot gas 3 to the dust collector 7 which may be of electrostatic type. This dust collector 7 is provided for collecting powdered iron oxide 4 which may be discharged at the bottom as indicated by an arrow. Spray water 9 and hot gas 3 are supplied to the recovering tower 8 where hydrochloric acid is recovered from the hot gas.

Iron and steel and iron oxide contain Si, Al, Cr, Cu, P and other impurities, while industrial water contains Ca. Accordingly, these elements are contained in the crude iron chloride solutions. Therefore, powdered iron oxide which has been produced by roasting the crude iron chloride solution also contains these elements as impurities.

Such a process for producing powdered iron oxide is rather simple and the costs of powdered iron oxide obtained thereby are low. Accordingly, powdered iron oxides obtained by this process are widely used as raw material for making soft ferrite of ordinary grades. However, for high-quality soft ferrite the powdered iron oxides according to this process cannot be used because of the impurities contained therein.

Powdered iron oxide having a decreased content of SiO₂ and CaO is also produced in such a process by employing a certain additional treatment of the crude iron chloride solution. However, the powdered iron oxide having a decreased content of SiO₂ and CaO is still unsatisfactory for high-quality soft ferrite, and such powdered iron oxides can also not be used for high-quality soft ferrite. Namely, it is exclusively high-purity powdered iron oxide having a very low content of impurities which can be used for high-quality soft ferrite.

Such a high-quality powdered iron oxide is usually produced by a so-called crystal refining method, wherein the crystals of iron sulfate or iron chloride are crystallized from an aqueous solution thereof, and the high-purity powdered iron oxides are produced by oxidizing these crystals.

However, in this method the impurities are not reduced sufficiently by a single round crystallization because the impurities are partly included in the crystals. Therefore, the crystals obtained thereby are dissolved again in water etc., and the crystals must be crystallized again. These treatments must be repeated several times in order to reduce the content of impurities of the crystals.

By this crystal refining method it is possible to obtain a high-purity powdered iron oxide in which every sort of impurities has a very low content, but this crystal refining process is complicated and the production costs of high-quality powdered iron oxide obtained thereby are very high. Also, it should be considered that among the impurities of powdered iron oxide some sorts of impurities may impair the properties of a soft ferrite, while others do not impair them. However, the general conception regarding a sort of impurities impairing the ferrite properties has been insufficient so far and it was difficult to improve the ferrite characteristics of powdered iron oxide of ordinary grades to the level which is desired for a high-quality soft ferrite.

The object underlying the present invention is to provide a method for producing powdered iron oxide wherein those sorts of impurities impairing the ferrite properties are selectively removed and wherein such powdered iron oxide can be produced at low cost and without requiring any complicated additional treatment so that the powdered iron oxide obtained thereby can be used for really high-quality soft ferrite having excellent ferrite and magnetic properties.

The invention has been made after having extensively studied the influences of the impurities contained in powdered iron oxide which had been produced by the oxidizing roasting of a crude iron chloride solution of the ferrite properties of a soft ferrite. These studies revealed that the ferrite properties are remarkably improved by controlling the P content of powdered iron oxides so that the P content is not more than 0,005 % by weight. Also, it was found by the inventors that the P content contained in a crude iron chloride solution can be decreased to a very low content by an advantageous new treatment.

According to the invention, a method for producing powdered iron oxide by oxidizing roasting an iron chloride solution is provided which is characterized by the following steps:
- the pH-value of a crude iron chloride solution is adjusted to a value in the range of 2,5 to 4,5,
- the solution is subjected to air bubbling which is continued until a solution is obtained the pH-value of which is not less than 1,5 and which contains insoluble Fe³⁺ compounds in an amount of 0,01 to 0,1 % by weight, being calculated as Fe,
- the insolubles are separated from the solution by filtration, and
- the resulting filtrate or purified solution is then roasted and oxidized in order to produce powdered iron oxide having a P content of not more than 0,005 % by weight.

A further development of the method according to the invention is characterized in that the adjustment of the pH-value is performed by using an alkali compound, such as aqueous ammonia, and/or by dissolving steel scrap or mill scale into an iron chloride solution.

A still further development of the method according to the invention is characterized in that the air bubbling is continued for at least 20 minutes.

According to another aspect of the present invention is the use of the iron oxide obtained by a method according to the invention for making ferrite, especially soft ferrite.

Further aspects, features and advantages of the invention will be readily apparent from the detailed description of preferred embodiments explained below, wherein reference is made to the accompanying drawings, in which
- Fig. 1: shows the principle of an oxidizing roasting process of an iron chloride solution;
- Fig. 2: shows the relation between the P content of powdered iron oxide and AC initial magnetic permeability »iac;
- Fig. 3: shows the relation between the P content of powdered iron oxide and the relative loss factor $\text{tanδ/»iac}$ ;
- Fig. 4: shows the formation of insoluble Fe³⁺ compounds and the P reduction rate of iron chloride solution by mechanical stirring;
- Fig. 5: shows the formation of insoluble Fe³⁺ compounds and the P reduction rate of iron chloride solution by air bubbling; and
- Fig. 6: schematically shows an apparatus for explaining the process flow of an ultrafiltration treatment.

According to the invention, powdered iron oxides have been used with different P contents, to which a high-purity manganese oxide and a high-purity zinc oxide were mixed in a usual manner so that the molecular ratio of Fe₂0₃ : MnO : ZnO was 53 : 24,5 : 22,5. The mixture was sintered at a temperature of 1350 °C and test pieces were obtained of ring shape having an outer diameter of 25 mm, an inner diameter of 15 mm and a thickness of 5 mm, wherein an AC initial magnetic permeability »iac and a relative loss factor $\text{tanδ/»iac}$ were measured at 1 kHz and 25 °C in accordance with the method prescribed in JIS C 2561.

Table 1 given below contains impurities of the powdered iron oxides used for each test piece or sample, the composition of the mixed powders and the magnetic properties of each sample. In Table 1, the test pieces No. 1 - No. 8 were produced by using the powdered iron oxides according to the present invention. Examples No. 9 - No. 11 were produced by using powdered iron oxides obtained by oxidizing and roasting a crude iron chloride solution by a conventional process without using any dephosphorizing treatment, and examples No. 14 and No. 15 were produced by using high purity powdered iron oxides obtained by a crystal refining method.

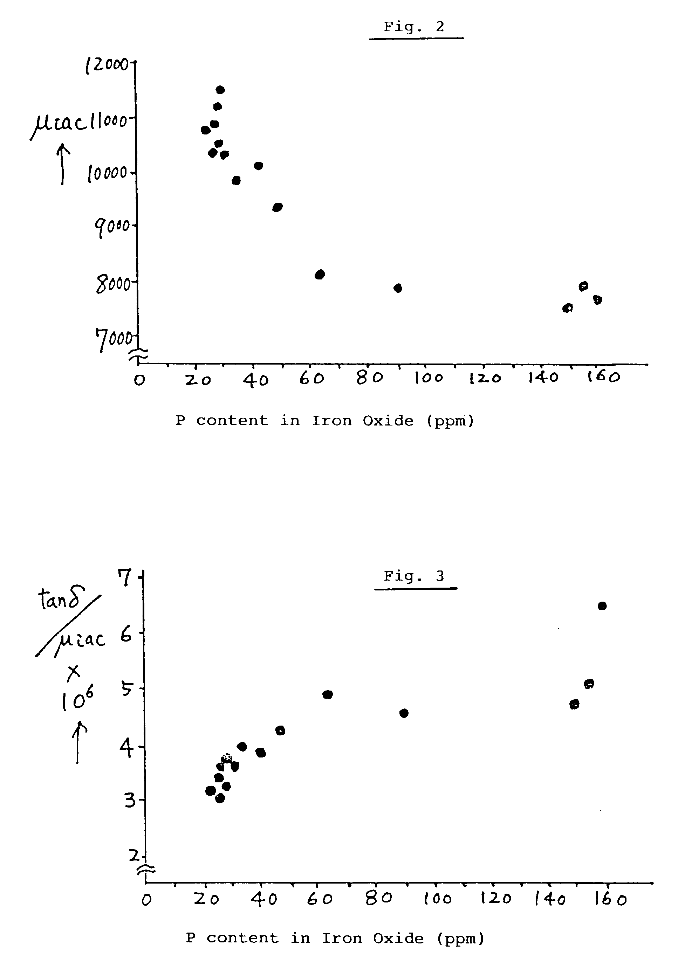

Fig. 2 shows the relation between the P content of powdered iron oxides and the AC initial magnetic permeability »iac as given in Table 1. Fig. 3 shows the relation between the P content of powdered iron oxides and the relative loss factor $\text{tanδ/»iac}$ given in Table 1. As can be seen from Table 1, the

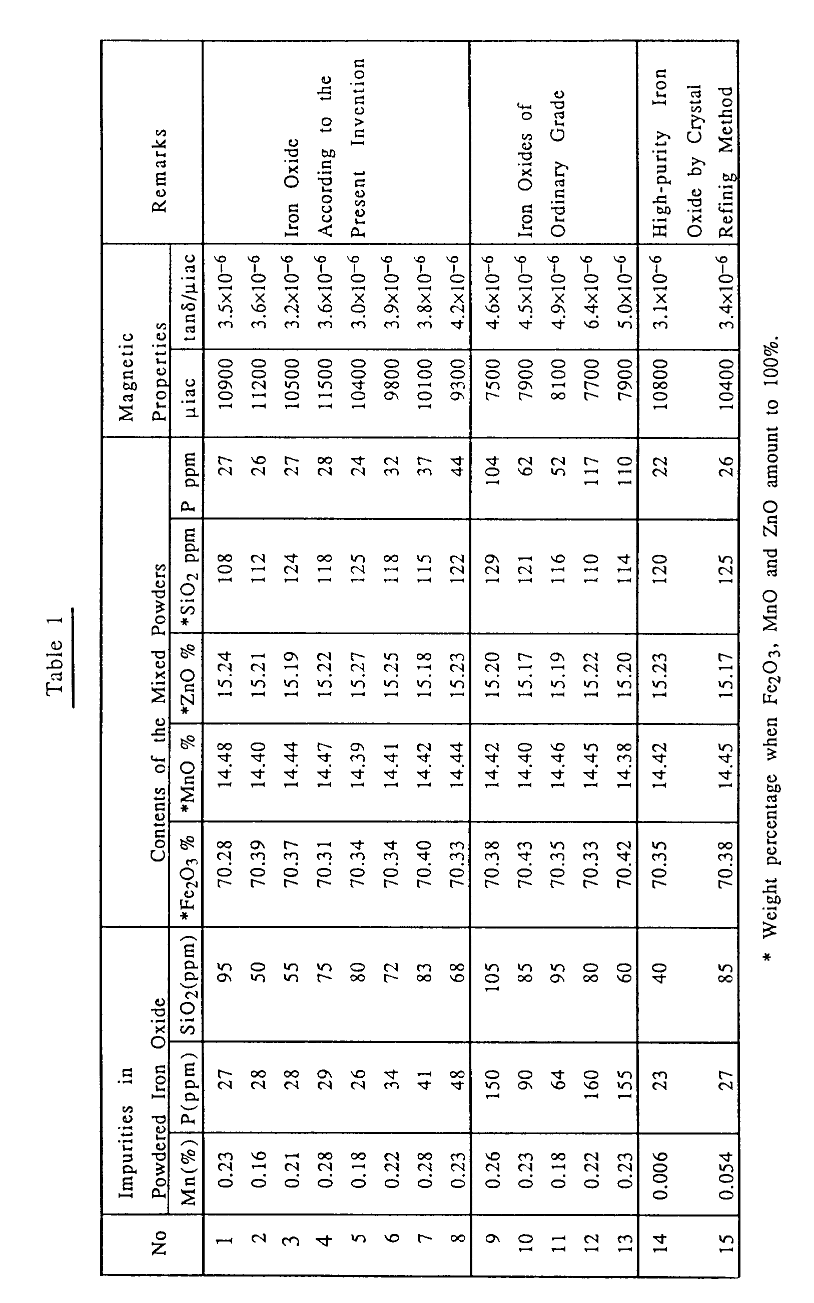

P content of mixed powders decreases when using powdered iron oxide having a low P content. As shown in Fig. 2 and Fig. 3, the magnetic properties of a soft ferrite are remarkably improved when using powdered iron oxides having a low P content.

Examples No. 1 - No. 8 of the test pieces using powdered iron oxides having a P content of not more than 0,005 % by weight have a lower P content in the mixed powder and therefore exhibit superior magnetic properties when compared with examples No. 9 - No. 13. Further, examples No. 1 - to No. 5 are examples using powdered iron oxides according to the invention, wherein the P content is not more than 0,003 % by weight, and they exhibit the same level of magnetic properties as those of examples No. 14 and No. 15.

Because of the reasons explained above, in the present invention powdered iron oxide is produced containing not more than 0,005 % by weight of phosphorus P.

According to one basic aspect of the present invention, the pH-value of the crude iron chloride solution is adjusted to 2,5 to 4,5, and this solution is mechanically stirred until the solution has become a solution whose pH-value is not less than 1,5 and which contains insoluble Fe³⁺ compounds of 0,01 to 0,1 % by weight, being calculated in terms of Fe. Thereafter, the solution is filtrated and the insolubles are separated and discharged from the solution. By this filtration, phosphorus P is removed as insoluble component, and the filtrate is a purified solution having a low P content. Subsequently, powdered iron oxide is obtained whose P content is not more than 0,005 % by weight by oxidizing roasting the purified solution obtained by filtration.

In the following, the use of crude iron chloride solution will be explained. Hydrochloric solutions are widely used for pickling and descaling iron and steel. The waste pickling solution which has been used for pickling and descaling, for example, contains about 11 % by weight of iron ions and about 0,0025 % by weight of P, and can be used as crude iron chloride solution. As described hereinafter, P in the crude iron chloride solution is removed in the form of insoluble compounds where P has an oxidation number of 5⁺. In an iron oxide formed on a surface of steel, P is contained in its oxidized state and is dissolved in the waste pickling solution. Accordingly, the phosphorus in the waste pickling solution is P⁵⁺, and the waste pickling solution can be used without pretreatment as described hereinafter.

Also, a crude iron chloride solution can be obtained by dissolving steel scrap in hydrochloric acid. However, since P is insufficently oxidized in steel scrap, phosphorus in the crude iron chloride solution is insufficently oxidized, too. Therefore, when using such an iron chloride solution obtained by dissolving steel scrap in hydrochloric acid, pretreatments are preferably performed for oxidizing P, for example, by heating the iron chloride solution by addition of 20 l of HNO₃ to every 1 m³ of the solution.

According to the present invention, the pH-value of the crude iron chloride solution is adjusted to 2,5 to 4,5. This adjustment of the pH-value may be performed by using for example an alkali compound, such as aqueous ammonia, but can also be performed by dissolving steel scrap or mill scale into the iron chloride solution, where H⁺ ions of the crude iron chloride solution are exhausted and the pH-value is adjusted thereby.

According to the basic aspect of the present invention, the solution having an adjusted pH-value is stirred mechanically in the air so that the pH-value of the solution decreases. When the pH-value drops to a value less than 1,5 in the course of mechanical stirring, it becomes difficult to reduce P sufficiently. However, when the pH-value is adjusted to not less than 2,5 before mechanical stirring, a pH-value of not less than 1,5 can easily be ensured during the mechanical stirring. The pH-value may be adjusted to more than 4,5, but when adjusted to such a high pH-value, a large amount of insolubles is formed in the solution resulting in that the efficiency of the filtration is lowered in an undesired manner.

According to the basic aspect of the present invention, the solution having an adjusted pH-value is stirred mechanically, and subsequently the insolubles contained therein are separated by filtration so that the filtrate is obtained as purified solution. "Mechanical stirring" means a usual stirring wherein stirrings arms or propellers or a circulation pump are used, and "filtration" means an ordinary filtration, for example by a filter press using a usual filter paper or filter cloth.

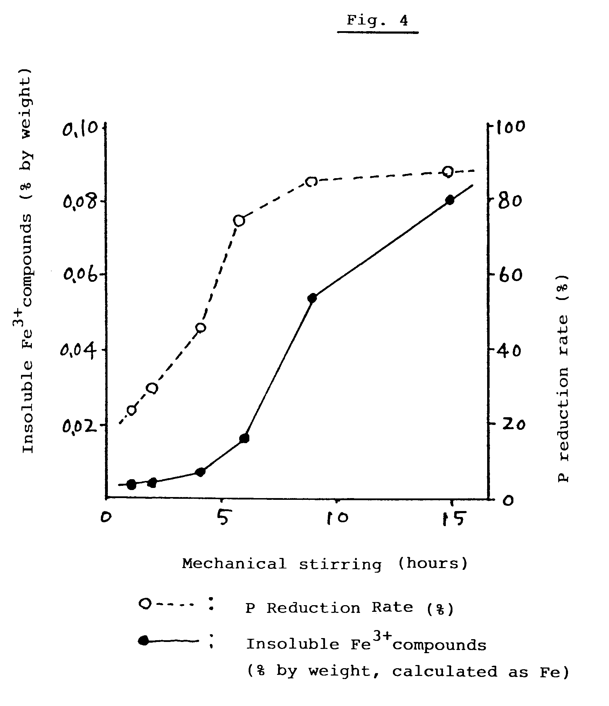

Fig. 4 shows the formation of insoluble Fe³⁺ compounds in the solution and the P reduction rate of the solution. In this specification, the P reduction rate is expressed as

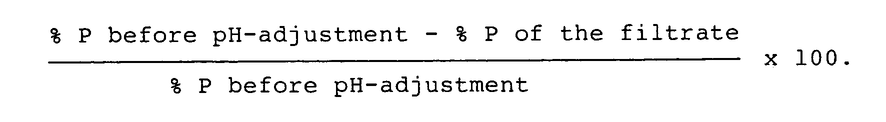

As can be seen from Fig. 4, when the mechanical stirring is performed for example for about 5 hours, less than 0,01 % by weight of insoluble Fe³⁺ compounds, being calculated as Fe, are formed in the solution. In this stage, the P reduction rate of the solution is less than 60 %. However, when the amount of insoluble Fe³⁺ compounds exceeds 0,01 % by weight, the P reduction rate of the solution is both high and stable. Mechanical stirring may continue further and form more than 0,1 % by weight of insoluble Fe³⁺ compounds, being calculated as Fe, but too high an amount of insoluble Fe³⁺ compounds formed in the solution may lower the efficiency of the subsequent filtration.

As explained above, the insoluble Fe³⁺ compounds should be formed in an amount of 0,01 to 0,1 % by weight, being calculated in terms of Fe. Also, according to the present invention, the pH-value of the solution is maintained at a value not less than 1,5 during the mechanical stirring and the filtration. When the insoluble Fe³⁺ compounds are formed by mechanical stirring, the pH-value of the solution decreases. As described hereinafter, when the pH-value of the solution decreases to a value less than 1,5, insoluble compounds of P formed in the solution are dissolved again into the solution and may pass through the meshes of filter papers or filter cloth during filtration, so that the amount of P in the purified solution increases.

When subjecting a crude iron chloride solution to the above mentioned treatments, a purified solution is obtained containing for example 11 % by weight of Fe and not more than 0,0008 % by weight of P. By oxidizing roasting such a purified solution by means of a usual method, for example using a fluidized layer of 700 °C of the oxidation roasting furnace 5 according to Fig. 1, powdered iron oxide with a P content of not more than 0,005 % by weight is produced.

According to the present invention, the method for producing powdered iron oxide is modified to a certain extent. In this method according to the invention, the pH-value of the crude iron chloride solution is adjusted to 2,5 to 4,5 as mentioned above, and thereafter is subjected to a step of air bubbling.

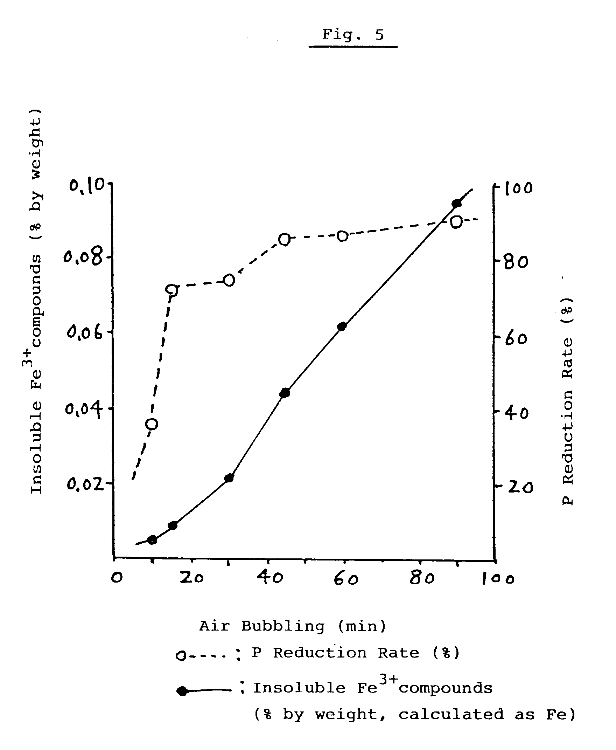

Fig. 5 shows the formation of insoluble Fe³⁺ compounds in the solution and the P reduction rate of the solution by air bubbling when time passes by.

As can be seen in Fig. 5, insoluble Fe³⁺ compounds can be formed in a comparatively short time by air bubbling. That is, an amount of 0,01 % by weight of insoluble Fe³⁺ compounds is formed by air bubbling for about 20 minutes, and by performing the air bubbling to this extent, a P reduction rate of the solution of more than 60 % can be realized.

If the air bubbling is performed for a longer time, more insoluble Fe³⁺ compounds are formed, but if the quantity of insoluble Fe³⁺ compounds reaches an amount of 0,1 % by weight, being calculated as Fe, too large a quantity of insolubles lower the efficiency of filtration. Therefore, in the method according to the invention the air bubbling is performed for such a period of time where the insoluble Fe³⁺ compounds are formed in an amount of 0,01 to 0,1 % by weight, calculated in terms of Fe. However, attention is to be paid to the pH-value of the solution not to be decreased to less than 1,5, otherwise P compounds are dissolved again in the solution and the amount of P in the purified solution increases.

When performing the treatments described above, a purified solution containing for example 11 % by weight of iron and not more than 0,0008 % by weight of P can be obtained. By oxidizing roasting this purified solution, powdered iron oxide can be produced having a P content of not more than 0,005 % by weight.

According to another basic aspect of the present invention, the pH-value of the crude iron chloride solution is adjusted 2,5 to 4,5, and the solution is directly treated by an ultrafiltration equipment, wherein the insolubles are removed by an ultrafilter so that a purified solution is obtained thereby.

In this respect, reference is made to Fig. of the drawings showing the process flow in principle for removing such insolubles.

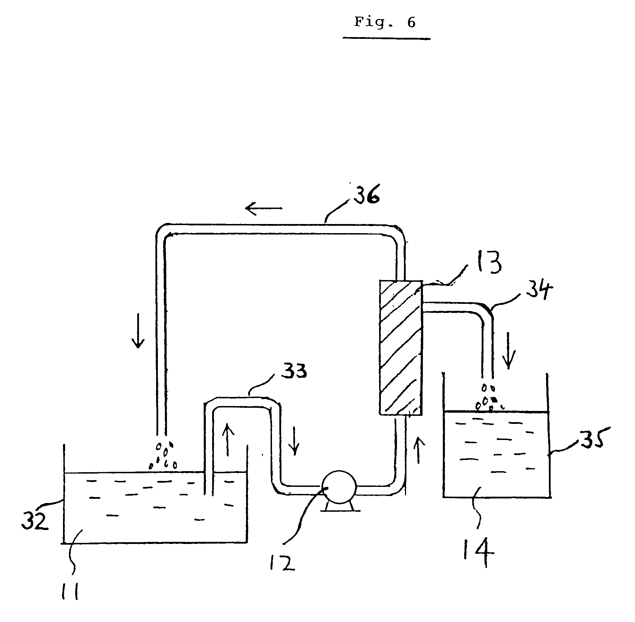

In Fig. 6, a reservoir 32 is provided containing crude iron chloride solution 11 having an adjusted pH-value. The reservoir 32 is connected to an ultrafilter 13 by means of a conduit 33 and a circulation pump 12. From the ultrafilter 13 a purified solution 14 is output through a first outlet 34 so that the purified solution 14 is collected in a further reservoir 35, while the second outlet 36 of the ultrafilter 13 is connected to the first reservoir 32 as shown in the drawing.

As mentioned above, even if the pH-value of the crude iron chloride solution is adjusted to a value in the range of 2,5 to 4,5, the P content of the filtrate obtained by usual filtration cannot be reduced sufficiently, unless making use of an additional treatment, for example mechanical stirring for more than 5 hours as in the example according to Fig. 4, or by using air bubbling for about 20 minutes as in the example of Fig. 5.

However, by treating the solution with an ultrafilter having a pore size of 20 Å, the P content in the purified solution can be reduced sufficiently even without mechanical stirring or air bubbling; in such a manner, a purified solution can be obtained containing 11 % by weight of iron and not more than 0,0008 % by weight of P. By oxidizing roasting this purified solution, powdered iron oxide can be produced having a P content of not more than 0,005 % by weight.

In the following, it will be explained how the present invention succeeds in obtaining powdered iron oxide having a P content of not more than 0,005 % by weight.

For example, steel scrap (carbon steel) usually contains 0,03 % by weight of P. A corresponding amount of phosphorus is also contained in the oxidized scale of such steel. When the steel scrap or the oxidized scale thereof is dissolved in hydrochloric acid, phosphorus P is also dissolved in the solution. As explained above, P in the waste pickling solution has an oxidation number of 5⁺, and P⁵⁺ in the crude iron chloride solution behaves as described in the following formulae (1) to (3):

$\text{H₃PO₄ = H⁺ + H₂PO} \frac{\text{-}}{\text{4}} \text{(1)}$

$\text{H₂PO} \frac{\text{-}}{\text{4}} \text{= H⁺ + HPO} \frac{\text{2-}}{\text{4}} \text{(2)}$

$\text{HPO} \frac{\text{2-}}{\text{4}} \text{= H⁺ + PO} \frac{\text{3-}}{\text{4}} \text{(3).}$

When the crude iron chloride solution is acidic and has a low pH-value, the dissociation of formulae (2) and (3) does not take place and only H₃PO₄ and H₂PO$\frac{\text{-}}{\text{4}}$ are formed in the solution. Then, P cannot be removed from the solution because H₃PO₄ and the metallic salts of H₂PO$\frac{\text{-}}{\text{4}}$ are water soluble.

When the pH-value of this solution is raised to 3,5 by adding another steel scrap thereto, dissociations according to formulae (2) and (3) take place so that HPO$\frac{\text{2-}}{\text{4}}$ and PO$\frac{\text{2-}}{\text{4}}$ ions are produced thereby. The HPO$\frac{\text{2-}}{\text{4}}$ and PO₄³⁻ ions may react with metallic ions in the solution and form metallic salts of HPO$\frac{\text{2-}}{\text{4}}$ and PO$\frac{\text{3-}}{\text{4}}$ , wherein the metallic salts of HPO$\frac{\text{2-}}{\text{4}}$ and PO$\frac{\text{3-}}{\text{4}}$ are insoluble in the crude iron chloride solution. Therefore, they can be separated as insolubles from the crude iron chloride solution by means of the methods as described above.

When the pH-value of the crude iron chloride solution is adjusted to a value in the range of 2,5 to 4,5, insoluble P compounds are formed. However, even if the P compounds in the solution are insolubles by adjusting the pH-value to 2,5 to 4,5, these insoluble P compounds have a very fine size. While it is possible to remove them by means of an ultrafilter having a small pore size of about 20 Å, it is difficult to separate them from the solution by employing a usual filter paper or filter cloth, since they usually pass through the meshes of the filter paper or filter cloth and enter into the purified solution.

When the crude iron chloride solution is subjected to mechanical stirring or to air bubbling in a sufficient manner and when more than 0,01 % by weight of insoluble Fe³⁺ compounds are formed, such insoluble P compounds can be filtrated with usual filter paper or filter cloth. It is assumed this is because the insoluble fine P compounds change to a type of insolubles which cannot pass through the meshes of filter paper or filter cloth.

In the embodiments described above, the time for starting the filtration is judged by the amount of insoluble Fe³⁺ compounds formed in the crude iron chloride solution. This timing of filtration can easily be judged during operation by observing the color of the solution, because the color of the crude iron chloride solution clearly turns to brown when an amount of 0,01 to 0,1 % by weight of insoluble Fe³⁺ compounds are formed and present in the solution.

As is readily apparent from the above description, the present invention provides methods for producing powdered iron oxide by oxidizing roasting an iron chloride solution when P has been removed intensively from this solution, wherein the described methods for removing phosphorus P from the solution present the striking advantage that they can be carried out very easily, with the result that powdered iron oxide can be produced in a simple and cheap manner as compared with the conventional crystal refining method.

Although powdered iron oxide produced according to the present invention contains other impurities such as Mn etc. which do not impair the magnetic properties of ferrite, the soft ferrite manufactured by using this very powdered iron oxide exhibits the same magnetic properties as a soft ferrite manufactured by using high-purity powdered iron oxides, resulting in that powdered iron oxides produced according to the invention can be used for manufacturing high-quality soft ferrite without disadvantage.

## Claims

1. A method for producing powdered iron oxide by oxidizing roasting an iron chloride solution,
characterized by the following steps:
- the pH-value of a crude iron chloride solution is adjusted to a value in the range of 2,5 to 4,5,
- the solution is subjected to air bubbling which is continued until a solution is obtained the pH-value of which is not less than 1,5 and which contains insoluble Fe³⁺ compounds in an amount of 0,01 to 0,1 % by weight, being calculated as Fe,
- the insolubles are separated from the solution by filtration, and
- the resulting filtrate or purified solution is then roasted and oxidized in order to produce powdered iron oxide having a P content of not more than 0,005 % by weight.

2. The method according to claim 1,
characterized in that the adjustment of the pH-value is performed by using an alkali compound, such as aqueous ammonia, and/or by dissolving steel scrap or mill scale into an iron chloride solution.

3. The method according to claim 1 or 2,
characterized in that the air bubbling is continued for at least 20 minutes.

4. The use of the iron oxide obtained by a method according to any of claims 1 to 3 for making ferrite, especially soft ferrite.

## Patentansprüche

1. Verfahren zum Herstellen von pulverförmigem Eisenoxid durch oxidierendes Rösten einer Eisenchloridlösung,
gekennzeichnet durch folgende Verfahrensschritte:
- der pH-Wert einer rohen Eisenchloridlösung wird auf einen Wert in dem Bereich von 2,5 bis 4,5 eingestellt,
- die Lösung wird einem Hindurchleiten von Luftblasen ausgesetzt, das solange fortgesetzt wird, bis eine Lösung erhalten wird, deren pH-Wert nicht kleiner als 1,5 ist und die unlösliche Fe³⁺ Verbindungen in einer Menge von 0,01 bis 0,1 Gew.-%, gerechnet als Fe, enthält,
- die unlöslichen Bestandteile werden von der Lösung durch Filtrierung getrennt und
- das resultierende Filtrat oder die gereinigte Lösung werden dann geröstet und oxidiert, um pulverförmiges Eisenoxid zu erzeugen, das einen P-Gehalt von nicht mehr als 0,005 Gew.-% besitzt.

2. Verfahren nach Anspruch 1,
dadurch gekennzeichnet,
daß die Einstellung des pH-Wertes durchgeführt wird durch Verwendung einer Alkaliverbindung, wie z.B. von wässrigem Ammoniak, und/oder durch Lösen von Stahlschrott oder Walzzunder in eine Eisenchloridlösung.

3. Verfahren nach Anspruch 1 oder 2,
dadurch gekennzeichnet,
daß das Hindurchleiten von Luftblasen mindestens 20 Minuten lang fortgesetzt wird.

4. Verwendung des Eisenoxides, erhalten mit einem Verfahren nach einem der Ansprüche 1 bis 3, zur Herstellung von Ferrit, insbesondere von weichem Ferrit.

## Revendications

1. Procédé pour préparer de l'oxyde de fer sous forme de poudre en soumettant une solution de chlorure de fer à une calcination oxydante,
caractérisé par les étapes suivantes :
- on ajuste la valeur du pH d'une solution brute de chlorure de fer à une valeur dans la plage de 2,5 à 4,5,
- on soumet la solution à un passage de bulles d'air, que l'on poursuit jusqu'à obtenir une solution dont le pH n'est pas inférieur à 1,5, et qui contient des composés insolubles de Fe³⁺, dans une quantité de 0,01 à 0,1% en poids, calculée sous la forme de Fe,
- on sépare les produits insolubles de la solution par filtration, et
- le filtrat, ou solution purifiée, qui résulte est alors grillé et oxydé afin de produire un oxyde fer en poudre ayant une teneur en P qui n'est pas supérieure à 0,005% en poids.

2. Procédé selon la revendication 1, caractérisé en ce que l'on procède à l'ajustement de la valeur du pH en utilisant un composé alcalin, comme par exemple du solution ammoniacale, et/ou en faisant dissoudre des débris d'acier ou des battitures de laminoir dans une solution de chlorure de fer.

3. Procédé selon l'une ou l'autre des revendications 1 et 2, caractérisé en ce qu'on poursuit le passage des bulles d'air pendant au moins 20 minutes.

4. Utilisation de l'oxyde de fer obtenu par un procédé selon l'une quelconque des revendications 1 à 3 pour préparer de la ferrite, spécialement de la ferrite douce.
